# EUROPEAN PATENT APPLICATION

(11) **EP 1 968 166 A2**
(43) Date of publication of application: **10.09.2008**
(21) Application number: 08151056.2
(22) Date of filing: 05.02.2008
(51) Int. Cl.: H02G 3/00

(54) **A junction fitting between cable trunkings and electrical cabinets**

(30) Priority: 06.02.2007 IT TO20070086
(71) Applicant: Bticino S.p.A., 20154 Milano (IT)
(72) Inventor: Gandini, Paolo, I-15065, Frugarolo (Alessandria) (IT); Garassino, Luca, I-15067, Novi Ligure (Alessandria) (IT)
(74) Representative: Deambrogi, Edgardo

(57) **Abstract**

A junction fitting between a cable duct and an electrical cabinet is described and comprises a modular universal structure including a pair of upright lateral profiled sections (10a, 10b; 110a, 110b; 210a, 210b; 310a, 310b) provided with duct connection means (20a, 20b; 120a, 120b; 220a, 220b; 320a, 320b) and a pair of closure panels, adapted to be configured (50, 52; 150, 152; 250, 252), respectively a front panel (50; 150; 250) and a base panel (52; 152; 252) adapted to connect the lateral profiled sections together,
the structure forming, in an assembled configuration, a box-shaped body of frustopyramidal shape having a first base section adapted to be connected to an end section of a cable duct (C; C1, C2, C3) and a second base section adapted to be connected to a wall of the cabinet, whose cross-sectional area increases progressively from the duct connection section to the cabinet coupling section.

## Description

The present invention relates in general to industrial electrical ducting for the distribution of electrical lines in environments, and in particular to junction fittings between cable-trunkings and electrical cabinets.

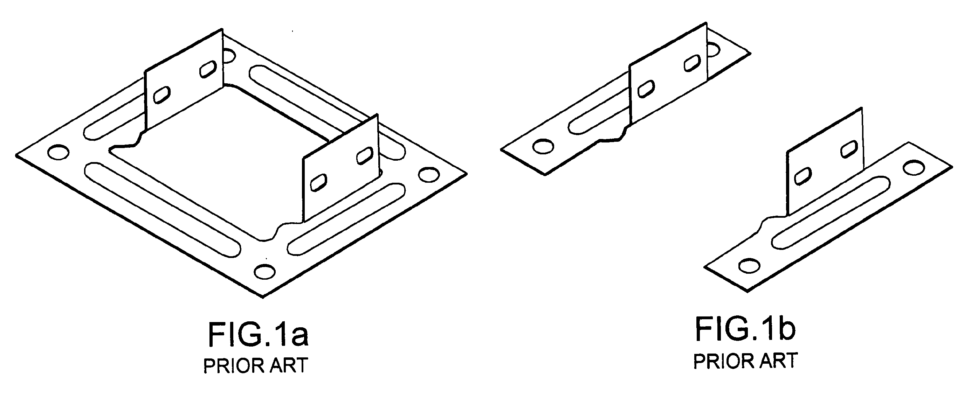

The most elementary known solutions, shown in Figs. 1a and 1b, involve simple flanges for attachment to a cabinet provided with orthogonal connecting tabs adapted to enable coupling with a cable-holder duct or tray member. These may take the form of full frames, in which case they are dedicated to a particular duct section (Fig. 1a), or may be formed by pairs of separate lateral members which can be adapted to duct sections of different width (Fig. 1b).

In both cases, one of the drawbacks of these solutions is that the cabinet input section is the same as the duct with the result, when using small duct sections, that small radii of curvature of the cables are necessary in order to achieve devices housed laterally in the cabinet with respect to the cable access point, leading to problems during the cabling of the cabinet. In a disadvantageous manner, in order to limit the curvature of the cables, use has up to now been made of duct sections greater than is strictly necessary.

A further drawback lies in the high number of articles that need to be available to allow for the connection of ducts of different sections (height, width).

Among other known solutions, the company Tehalit uses a junction solution formed by a box-shaped body of prismatic shape, of modular type. The junction includes a pair of supports which may be applied to a wall or to the cabinet and are adapted to engage with a front cover panel, a pair of lateral closure caps and possibly a base cover. The cover panel has to be cut to size as a function of the width of the cabinet on which it is to be disposed, and the cable ducts are engaged on a surface of the panel at the location of openings obtained by cutting and removal of a portion of this surface. To facilitate the assembly of the junction and the operations to remove part of the surface, the cover panel comprises a series of pre-cut lines in positions corresponding to the possible heights of available ducts. In a disadvantageous manner, this solution functions only in a wall support configuration of the duct and entails problems as regards the coupling between the duct and cabinet since no mechanical connection is provided, solely a closing up of the parts, making it impossible to ensure a high level of IP protection against external agents. Moreover, as the front cover panel is made from plastics material in order to provide an easier configuration by means of the removal of pre-cut sectors of its surface, a continuous electrical path cannot be ensured between conducting surfaces when metal ducts are being connected.

The object of the present invention is to provide a universal solution for a junction between cable-trunkings and electrical cabinets which can be adapted to a range of ducts of different sections and allows for their fastening on any type of electrical cabinet.

According to the present invention, this object is achieved by means of a junction fitting having the characteristic features set out in claim 1.

Particular embodiments are set out in the dependent claims.

The present invention further relates to a kit for a junction fitting between a cable-trunking and an electrical cabinet, as claimed.

In brief, the present invention is based on the principle of providing a modular junction fitting having a universal structure which includes a pair of lateral profiled sections in the form of uprights, provided with duct connection means, which may be connected together by means of a pair of closure panels, respectively a front panel and a base panel, and which forms, in its assembled configuration, a frustopyramidal box-shaped body open at top and bottom, whose cross-sectional area increases progressively from the duct connection section to the cabinet coupling section.

Advantageously, a single version of the lateral profiled sections is provided, which is adapted to any type of duct among a plurality of available ducts of different height, and a universal panel module is provided which can be configured by an installer in order to achieve a front closure panel and a base closure panel which are both adapted to the height and possibly the width of the duct in question.

Conveniently, this universal structure enables the assembly of a fitting for a junction between various types of duct (different in height and width, i.e. in section) and a cabinet, i.e. a junction fitting having a configuration adapted to one of a plurality of possible dimension classes of the cable-trunking and to the relative electrical cabinet for which it is intended.

Finally, it offers the advantage that a series of fittings of different dimensions may be achieved from a small number of available constituent components (a pair of lateral upright profiled sections and a universal, or common, module for the formation of the closure panels), thus enabling a drastic reduction of storage costs.

Further advantages and features of the present invention will become clear from the following detailed description which is given with reference to the appended drawings which are provided purely by way of non-limiting example and in which:
Figs. 1a and 1b show two embodiments of a junction fitting of the prior art;
Figs. 2a and 2b are perspective views from different angles of a lateral profiled section of a universal structure for a junction fitting according to a first embodiment of the invention;
Fig. 3 is a view in lateral elevation of a closure panel module according to a first embodiment of the invention;
Figs. 4a, 4b and 4c are perspective views of a junction fitting according to a first embodiment of the invention, partially assembled, coupled with three different types of cable duct with different heights;
Fig. 5a is a perspective view of a pair of lateral profiled sections of a universal structure for a junction fitting according to a second embodiment of the invention;
Fig. 5b is a perspective view of a front closure panel and a base closure panel according to a second embodiment of the invention;
Figs. 6a, 6b and 6c are perspective views of a junction fitting according to a second embodiment of the invention, completely or partially assembled, coupled with a cable duct and an electrical cabinet;
Figs. 7a and 7b are perspective views from different angles of a junction fitting according to a third embodiment of the invention, completely assembled;
Figs. 8a, 8b and 8c are perspective views of a junction fitting according to a third embodiment of the invention, partially assembled, coupled with three different types of cable duct with different heights; and
Figs. 9a and 9b are perspective views of a junction fitting according to a fourth embodiment of the invention, fully or partially assembled, coupled with a cable duct and an electrical cabinet.

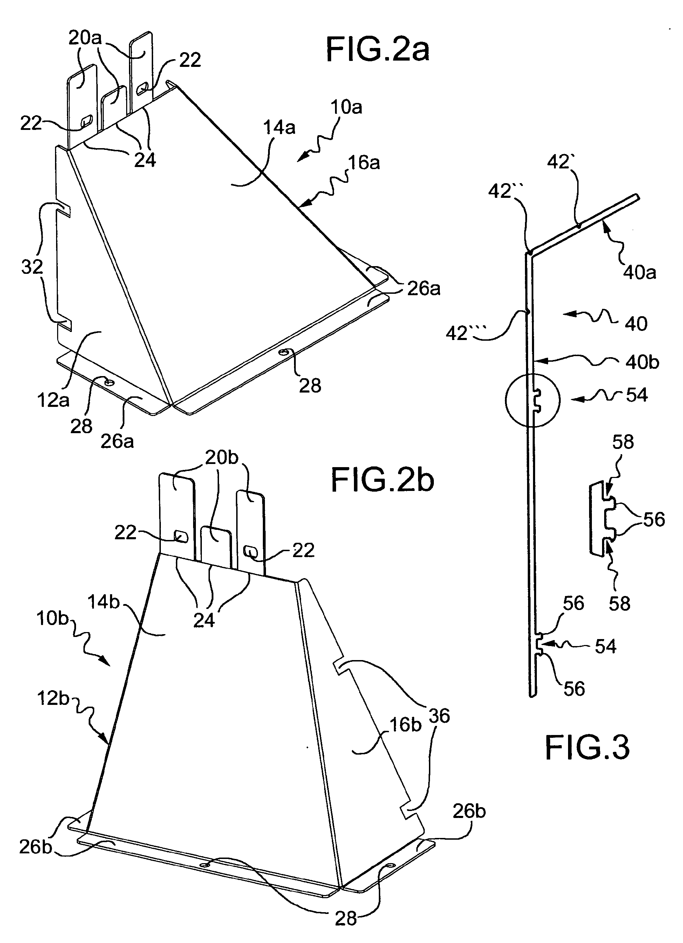

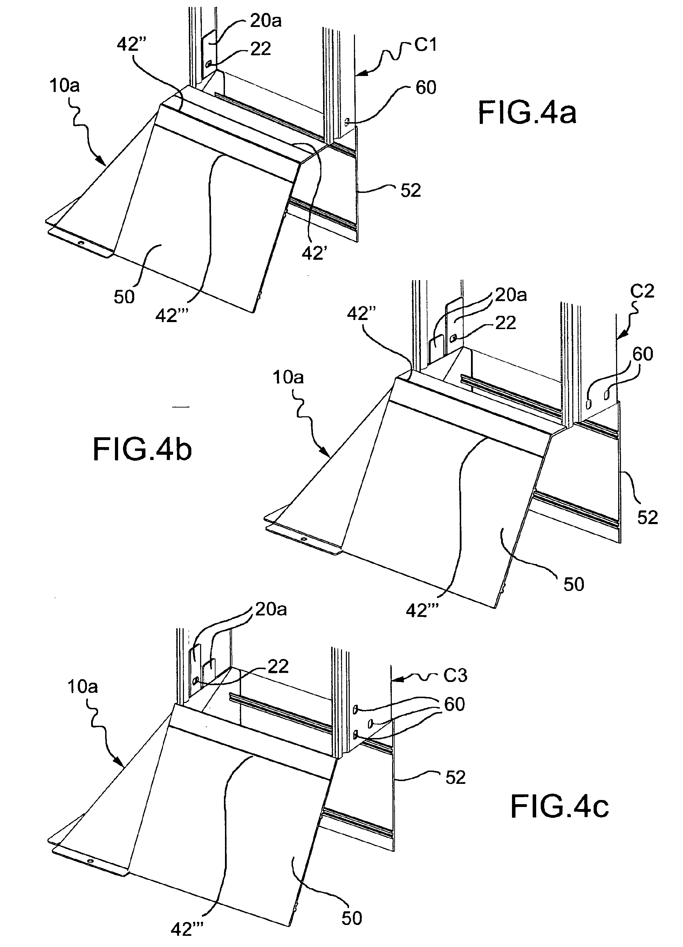

A currently preferred embodiment of a universal structure for a junction fitting is shown in its elements in Figs. 2a, 2b and 3, and in a partially assembled configuration in Figs. 4a to 4c.

A pair of lateral upright profiled sections 10a, 10b is shown in a perspective view from different angles in Figs. 2a and 2b.

They comprise a respective base wall 12a, 12b which is substantially vertical, a respective lateral wall 14a, 14b which is inclined and a respective front wall 16a, 16b which is also inclined; overall, they form a general frustopyramidal shape which extends between an upper section adapted to be connected to an end section of a cable duct and a second lower section adapted to be coupled to a wall of an electrical cabinet.

The base wall is at right angles to the base sections via which coupling to the duct and the cabinet takes place, and ideally forms a prolongation of the base wall of the duct, as a result of which it is adapted to abut on a bearing support structure, such as a wall of the premises in which the ducting is laid, used to support the duct. The lateral and front walls are inclined with respect to the base sections as a result of which the cross-sectional area of each profiled section increases progressively from the duct connection section to the cabinet coupling section. The purpose of this is to offer a kind of inducement for the cables as regards access to the cabinet, thereby avoiding the drawback of small radii of curvature of the cables.

The profiled sections 10a, 10b each have a plurality of duct connection tabs, extending at right angles to the upper duct connection section, shown respectively by 20a and 20b. In the embodiment shown, there are three tabs enabling coupling with ducts of three different heights. Two of these tabs are provided with connection slots 22 and one is blind. The tabs are joined to a lateral wall of the profiled section via a weakened connection edge 24 or, as an alternative, via connection appendices which enable their selective removal.

On the opposite side, at the lower section for coupling to the board, the profiled sections comprise, for each wall, a respective flange 26a, 26b each bearing a hole 28 for connection to a wall of the cabinet by means of known fastening means, for instance retaining screws.

The front and base walls also comprise respective pairs of notches 32, 36 forming housings for the detachable connection of closure panels of the fitting.

Fig. 3 is a lateral view of a universal closure panel module 40 of the fitting. It comprises two walls, respectively a base wall 40a and a lateral wall 40b, joined to form an obtuse or, in other variants, a right-angled dihedron. Transverse incisions 42', 42", 42'" are provided along the walls and at the connection edge and form lines weakening the panel in order to facilitate its breakage for configuring a front closure panel 50 and a base closure panel 52 as a function of the height of the duct to which the fitting is to be connected.

The closure panels 50 and 52 may be obtained from a pair of universal modules 40, but, in an alternative variant, provision is made for a single common closure panel module 40, substantially similar to that shown in Fig. 3, in which the lateral wall 40b is further prolonged in order to include a base panel portion from which the front panel portion is separated via a further transverse weakening incision.

The lateral wall 40b further comprises hooking teeth formation 54, for instance (see the enlarged area), pairs of transverse ribs 56 projecting from the surface of the panel which define undercut portions 58 adapted to be received in a sliding or snap-locking manner and stably held by positive coupling between the pairs of notches 32, 36 of the front and base walls of the lateral profiled sections. This hooking solution assures that the closure panels 50, 52 can be removed to enable any cabling operation of the cabinet which may prove necessary after installation has taken place.

Figs. 4a, 4b and 4c show the junction fitting of the invention in a partially assembled configuration, in which one of the two lateral profiled sections has been omitted solely to make the drawing clear, and coupled with three different types of cable duct whose heights differ (shown here without a cover).

Fig. 4a shows the junction fitting in a coupled condition with a cable duct C1 of lower height, for instance a duct of a height of 50 mm provided with a single connection slot 60 in proximity of the end section of each lateral wall.

In order to configure the fitting, two tabs are removed and the remaining tab is operationally disposed so that it is superimposed on the lateral walls of the duct as a result of which its slot 22 is congruent with the slot 60 provided in the lateral wall of the duct. The front closure panel 50 is formed by a first module 40 comprising the integral base wall 40a and the lateral wall 40b, and the base closure panel 52 is formed by a second module 40 configured by removal of the base wall and the upper section of the lateral wall along the incision line 42"'.

Fig. 4b shows the junction fitting in a coupled condition with a cable duct C2 of medium height, for instance a duct of a height of 75 mm provided with two connection slots 60 aligned transversely in proximity of the end section of each lateral wall.

For the configuration of the fitting only one tab is removed, and the remaining tab provided with the slot is operationally disposed so that it is superimposed on the lateral walls of the duct as a result of which its slot 22 is congruent with a first slot 60 provided on the lateral wall of the duct, and the remaining blind tab closes the second slot provided on the lateral wall of the duct. The front closure panel 50 is formed by a first module 40 from which a portion is removed from the base wall 40a along the weakening line 42', and the base closure panel 52 is formed by a second module 40 configured by removal of the base wall and the upper section of the lateral wall along the incision line 42"'.

Lastly, Fig. 4c shows the junction fitting in a coupled condition with a cable duct C3 of greater height, for instance a duct of a height of 100 mm provided with three connection slots 60 in proximity of the end section of each lateral wall.

For the configuration of the fitting only one tab is removed, and the remaining tab provided with a slot is disposed operationally so that it is superimposed on the lateral walls of the duct as a result of which its slot 22 is congruent with a slot 60 provided in the lateral wall of the duct and closes a second longitudinally aligned slot, and the remaining blind tab closes the further slot 60 provided on the lateral wall of the duct. The front closure panel 50 is formed by a first module 40 comprising only the integral lateral wall 40b, which may be obtained by removal of the base wall 40a along the weakening line 42", and the base closure panel 52 is formed by a second module 40 configured by removal of the base wall and the upper section of the lateral wall along the incision line 42"'.

In this way, for each possible duct configuration (C1, C2, C3 in the example shown), a dedicated fitting may be provided from a universal structure and the duct may be connected thereto via connection means which engage with the congruent slots such that the duct is always flush with the base wall of the fitting, enabling both components to abut on a bearing support structure, for instance a wall of the premises in which the ducting is laid.

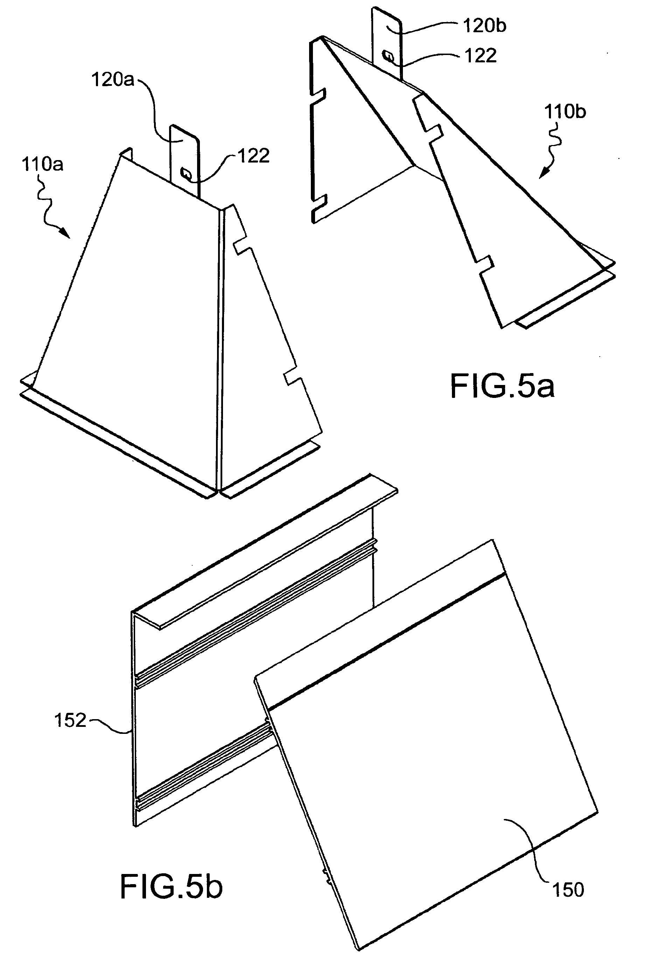

Fig. 5a is a perspective view of a pair of lateral profiled sections 110a, 110b of a universal structure for a junction fitting according to a second embodiment of the invention, and Fig. 5b shows a front closure panel 150 and a base closure panel 152 adapted to be coupled to the lateral profiled sections 110a and 110b .

This is a simplified version of the first embodiment, in which the lateral profiled sections 110a, 110b each comprise a single tab 120a, 120b provided with a slot 122.

The front and base closure panels 150 and 152 may also be obtained from a universal (or common) closure panel module (not shown) which in this particular case comprises a base wall and a lateral wall forming the surfaces of a right-angled dihedron.

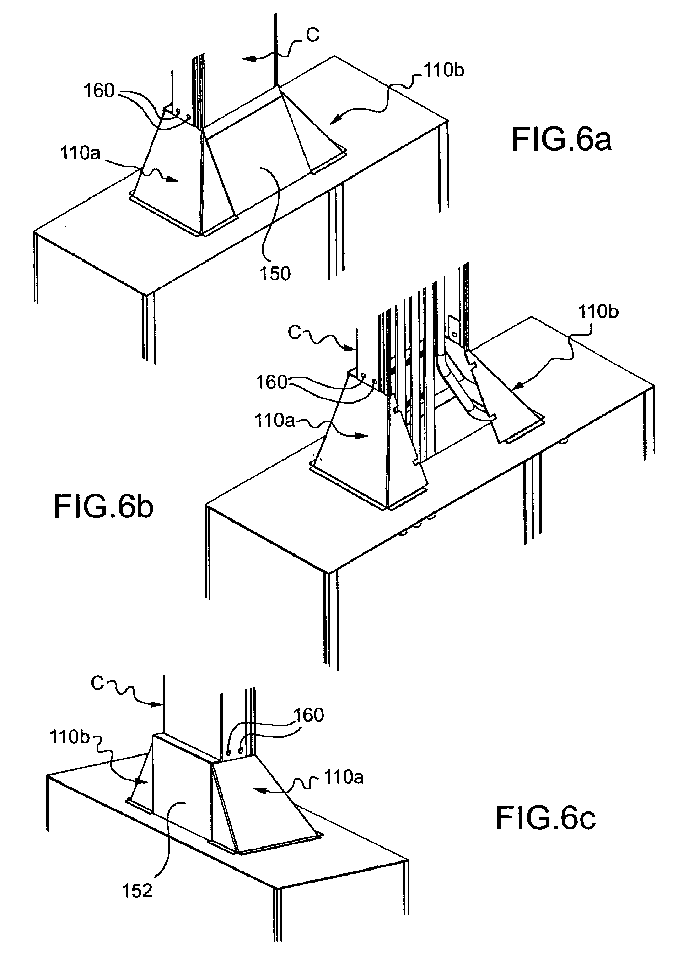

Figs. 6a, 6b and 6c are perspective views of the junction fitting formed by the combination of the parts of Figs. 5a and 5b, fully or partially assembled, and coupled with a cable duct C of medium height (75 mm in the example) and with an electrical cabinet.

In this case, the duct C may be disposed in a forward or a retracted position as a function of the arrangement of its connection slots 160 in order to obtain its superimposition with respect to the slots 122.

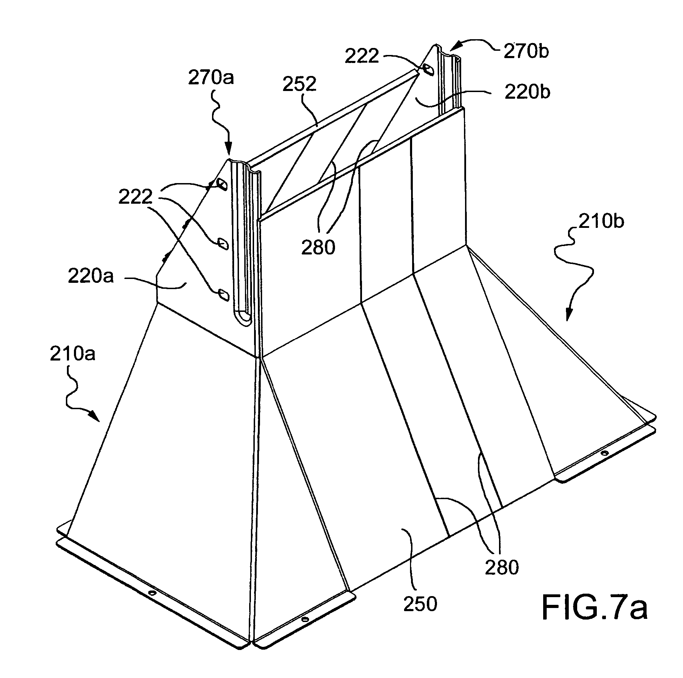

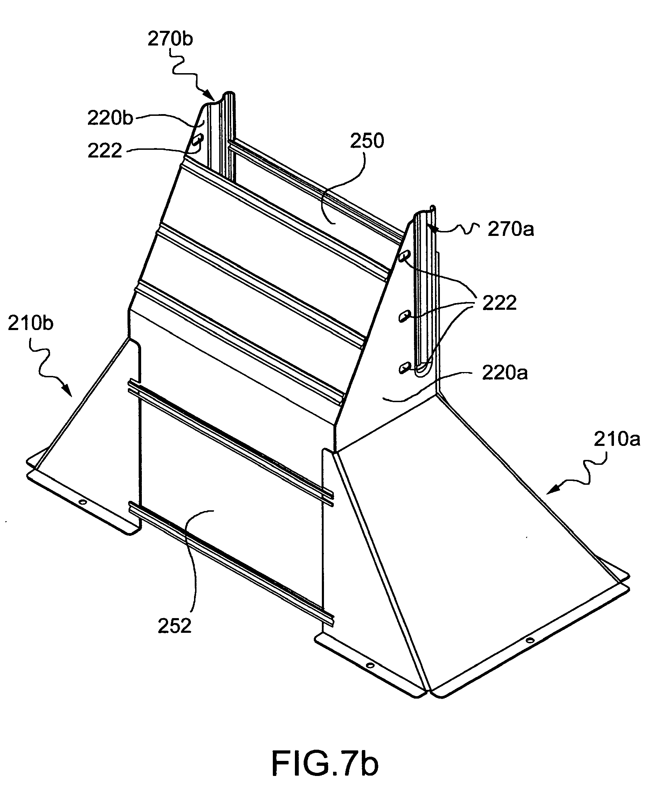

Figs. 7a and 7b are perspective views from different angles of a junction fitting according to a third embodiment of the invention.

The lateral profiled sections 210a, 210b comprise, in place of the tabs, a pair of opposing flange formations 220a and 220b of substantially triangular shape which extend in a direction orthogonal to the upper duct connection section and are provided with a plurality of longitudinally aligned connection slots 222 arranged to be engaged by duct connection means.

Each flange formation also comprises a respective shaped surface portion 270a, 270b forming a groove facing the exterior of the profiled section, of a shape and extension corresponding to that of an edge portion of the duct shaped by drawing and adapted to receive a folded edge portion of a cover of the duct (not shown), so as to enable the engagement in a sliding or snap-locking manner of the edge of the duct on the pair of flanges 220a, 220b and its stable retention by positive coupling.

The front closure panel 250 and the base closure panel 252 comprise, in addition to the transverse weakening incisions (not shown), possible longitudinal incisions, shown by reference numeral 280, which form weakening lines of the panel in order to facilitate its breakage with a view to its further configuration as a function of the width of the duct to which the fitting is to be connected.

It will be appreciated that in this and in the other embodiments described, these incisions could also be omitted, as a result of which the closure panel modules would be adapted to the width of the duct by means of a tool (for instance a hacksaw) guided by an operator skilled in cutting to measure.

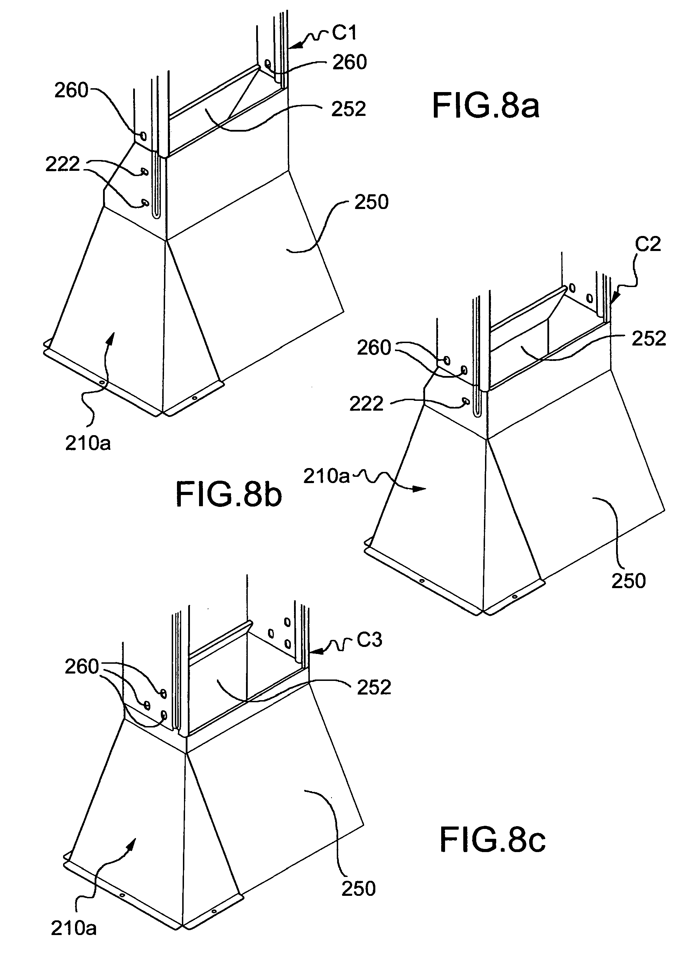

Figs. 8a, 8b and 8c are perspective views of the junction fitting, partially assembled, coupled with three different types of cable duct C1, C2 and C3 of different heights.

The duct is keyed on the flanges and coupled thereto by sliding of its shaped edge portion with respect to the shaped surface portion 270a, 270b of the flanges. The duct is disposed on the flanges at a base section with variable depth as a function of the height of the duct, ensuring, in any case, that relative connection slots 222 and 260 are superimposed on one another.

The closure panels 250 and 252 are thus configured as a function of the depth to which the duct is disposed on the flanges, by selective removal of portions along respective transverse weakening lines.

In this embodiment as well, the duct may be disposed in a forward or retracted position with respect to the base wall of the fitting, and therefore to a bearing support structure, for instance a wall of the premises in which the ducting is laid, as a function of its height.

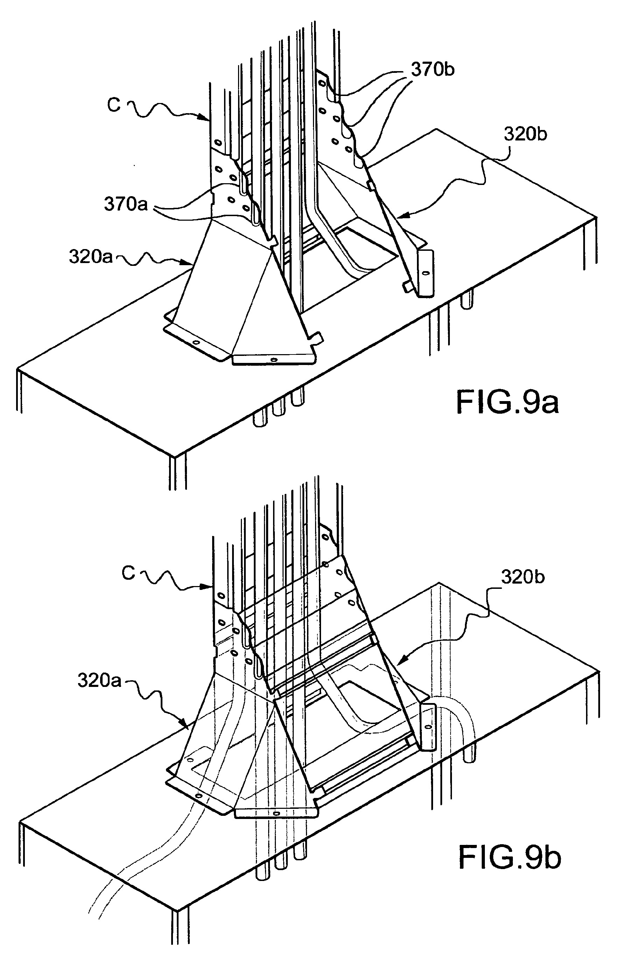

To remedy this drawback, while maintaining the proposed constructional solution using duct connection flanges instead of tabs, a further embodiment is possible, as shown in Figs. 9a and 9b, in which the flanges 320a and 320b have a plurality of parallel shaped surface portions 370a, 370b, each adapted to receive a shaped edge portion of the duct, as a function of its height.

In each of the embodiments herein described, the lateral profiled sections are preferably made from metal material to ensure a solid and robust mechanical connection as well as electrical continuity with metal ducts. The front and base closure panels are preferably made from plastics material for greater ease of construction of the respective formations for connection to the profiled sections (by moulding) and to ensure a greater ease of configuration during cutting as well as flexibility of installation.

It will be appreciated that the duct connection flanges or tabs do not have a support function in any of the embodiments as the duct is generally supported by appropriate brackets.

Advantageously, the solution as described makes it possible to obtain the same level of IP protection characteristic of the duct, without any deterioration. In order further to improve the IP level, the fitting enables known cable gland devices to be secured on the cabinet.

The manner in which the present invention is embodied in the preceding description is purely by way of example and does not limit the present invention. A person skilled in the art could readily embody the present invention by means of different embodiments which do not, however, depart from the principles set out here and therefore come within the scope of the present invention.

This is in particular true of the possibility of replacing a closed duct or tray with drilled ducts or trays or even with mesh trays, without prejudice in this latter case to the use of suitable plate joining members for adaptation to the connection means of the junction fitting.

Naturally, the principle of the invention remaining the same, the forms of embodiment and details of construction may be varied widely with respect to those described and illustrated, which have been given purely by way of example, without thereby departing from the scope of the invention as set out in the accompanying claims.

## Claims

1. A junction fitting between a cable duct and an electrical cabinet, **characterized in that** it comprises a modular universal structure including a pair of upright lateral profiled sections (10a, 10b; 110a, 110b; 210a, 210b; 310a, 310b) provided with connection means for the duct (20a, 20b; 120a, 120b; 220a, 220b; 320a, 320b) and a pair of closure panels adapted to be configured (50, 52; 150, 152; 250, 252), respectively a front panel (50; 150; 250) and a base panel (52; 152; 252) adapted to connect the lateral profiled sections together,
the structure forming, in an assembled configuration, a box-shaped body of frustopyramidal shape having a first base section adapted to be connected to an end section of a cable duct (C; C1, C2, C3) and a second base section adapted to be coupled to a wall of the cabinet, whose cross-sectional area increases progressively from the duct connection section to the cabinet coupling section.

2. A junction fitting according to claim 1, wherein the duct connection means comprise at least one pair of opposing tabs (20a, 20b; 120a, 120b) which extend in a direction orthogonal to the first base section and are provided with slots (22, 122) for the engagement of duct connection means, the tabs (20a, 20b; 120a, 120b) being adapted, in the operational arrangement, to be superimposed on respective lateral walls of the duct (C; C1, C2, C3) as a result of which the slots (22, 122) are congruent with respective connection slots (60; 160) provided in proximity of the end section of the duct.

3. A junction fitting according to claim 2, wherein the duct connection means comprise a plurality of pairs of opposing tabs (20a, 20b), adapted to be selectively removed, at least one sub-assembly of which is provided with slots (22) for the engagement of duct connection means, the tabs (20a, 20b) being adapted, in the operational arrangement, to be superimposed on respective lateral walls of the duct (C; C1, C2, C3) as a result of which the slots (22) of at least a pair of tabs (20a, 20b) are congruent with respective connection slots (60) provided in proximity of the end section of the duct.

4. A junction fitting according to claim 1, wherein the duct connection means comprise a pair of opposing flange formations (220a, 220b; 320a, 320b) which extend in a direction orthogonal to the first base section and are provided with a plurality of slots (222) for the engagement of duct connection means, these flange formations (220a, 220b; 320a, 320b) being adapted, in the operational arrangement, to be superimposed on respective lateral walls of the duct (C; C1, C2, C3) as a result of which at least one pair of opposing slots (222) is congruent with respective connection slots (260) provided in proximity of the end section of the duct.

5. A junction fitting according to claim 4, wherein the flange formations have at least one portion shaped by drawing (270a, 270b; 370a, 370b) congruent with a respective shaped portion provided on the lateral walls of the duct for the engagement of a cover.

6. A junction fitting according to any one of the preceding claims, wherein each lateral profiled section comprises a straight base wall (12a, 12b) with respect to the base sections and a pair of walls, respectively lateral (14a, 14b) and front (16a, 16b) walls, inclined with respect to the base sections.

7. A junction fitting according to any one of the preceding claims, wherein the front and base closure panels (50, 52) may be obtained from a universal panel module (40) having transverse weakening incisions (42', 42", 42"') for the configuration of the front (50) and base (52) panels as a function of the height of the duct.

8. A junction fitting according to any one of claims 1 to 6, wherein the front and base closure panels (50, 52) may be obtained from a common panel module having transverse weakening incisions for the configuration of the front panel and the base panel as a function of the height of the duct.

9. A junction fitting according to claim 7 or 8, wherein the panel module (40) comprises a pair of walls forming a right-angled dihedron.

10. A junction fitting according to claim 7 or 8, wherein the panel module comprises a pair of walls (40a, 40b) forming an obtuse dihedron.

11. A junction fitting according to claim 7 or 8, wherein the panel module comprises longitudinal weakening incisions (280) for the configuration of the front panel (250) and the base panel (252) as a function of the width of the duct.

12. A junction fitting according to any one of the preceding claims, wherein the lateral profiled sections (10a, 10b) include at least one flange (26a, 26b) for coupling to a wall of the electrical cabinet, having at least one seat (28) for fastening means.

13. A junction fitting according to any one of the preceding claims, wherein the lateral profiled sections (10a, 10b) comprise seats (32, 26) for detachable connection with the closure panels (50, 52), these seats comprising transverse notches adapted to receive and retain, by positive coupling, hooking teeth formations (54) projecting from the panels.

14. A junction fitting according to any one of the preceding claims, wherein the lateral profiled sections (10a, 10b; 110a, 110b; 210a, 210b; 310a, 310b) are of metal material and the closure panels are of plastics material.

15. A kit for a junction fitting between a cable duct and an electrical cabinet, comprising:
- a pair of upright lateral profiled sections (10a, 10b; 110a, 110b; 210a, 210b; 310a, 310b) provided with duct connection means (20a, 20b; 120a, 120b; 220a, 220b; 320a, 320b), and
- at least one universal panel module (40), adapted to be configured, having transverse weakening incisions (42', 42", 42"') for the fabrication of a front closure panel (50; 150; 250) and a base closure panel (52; 152; 252) as a function of the height of the duct, these closure panels being adapted to connect the lateral profiled sections together,
the lateral profiled sections and the closure panels being adapted to form, in an assembled configuration, a box-shaped body of frustopyramidal shape having a first base section adapted to be connected to an end section of a cable duct (C; C1, C2, C3) and a second base section adapted to be connected to a wall of the cabinet, whose cross-sectional area increases progressively from the duct connection section to the cabinet coupling section.
